(19) Europäisches Patentamt / European Patent Office / Office européen des brevets

(11) **EP 4 492 097 A1**

(12) **DEMANDE DE BREVET EUROPEEN**

(43) Date de publication:
**15.01.2025 Bulletin 2025/03**

(21) Numéro de dépôt: **24188465.9**

(22) Date de dépôt: **12.07.2024**

(51) Classification Internationale des Brevets (IPC):
**G01S 19/49** *(2010.01)* **G01C 21/16** *(2006.01)*
**G01S 19/40** *(2010.01)* **G01S 19/43** *(2010.01)*
**G01S 19/47** *(2010.01)*

(52) Classification Coopérative des Brevets (CPC):
**G01S 19/40; G01C 21/165; G01S 19/43;**
**G01S 19/47;** G01S 19/393

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **13.07.2023 FR 2307495**

(71) Demandeur: **Commissariat à l'Energie Atomique et aux Energies Alternatives**
**75015 Paris (FR)**

(72) Inventeur: **VILLIEN, Christophe**
**38054 GRENOBLE cedex 09 (FR)**

(74) Mandataire: **Atout PI Laplace**
**Immeuble Up On**
**25 Boulevard Romain Rolland**
**CS 40072**
**75685 Paris Cedex 14 (FR)**

(54) **PROCEDE DE DETERMINATION D'UNE TRAJECTOIRE D'UN PORTEUR MOBILE EN TEMPS REEL ET EN TEMPS DIFFERE**

(57) L'invention se rapporte à un procédé de détermination d'une trajectoire d'un porteur mobile, comprenant les étapes suivantes:

S1) à chaque instant $t_i$, détermination d'une trajectoire fusionnée (TrA) du porteur mobile, la trajectoire fusionnée (TrA) étant obtenue par fusion de données fournies par au moins un capteur à information de position relative (CR) avec des données fournies par au moins un capteur à information de position absolue (CA), et, à une pluralité d'instants déterminés $t_k$ parmi les instants $t_i$, génération d'un paquet de données fusionnées $(D_k^{fus})$ comprenant des données fusionnées à l'instant déterminé $t_k$ et au moins un indicateur de confiance $(c_k^{fus})$ associé au paquet de données de la position fusionnée à l'instant déterminé $t_k$, l'indicateur de confiance $(c_k^{fus})$ comprenant une information de précision des données fournies par le capteur à information de position absolue (CA) ;

S2) à chaque instant déterminé $t_k$, détermination d'une trajectoire régularisée (TrB) en fonction de la détection d'un saut de position dans le paquet de données fusionnées $(D_k^{fus})$ entre l'instant sélectionné précédent $t_{k-1}$ et l'instant sélectionné $t_k$.

EP 4 492 097 A1

**Description**

**Domaine technique**

La présente invention se rapporte à un procédé et à un système de détermination d'une trajectoire d'un porteur mobile.

Le domaine technique de l'invention est celui de la localisation par fusion de données entre des données issues d'un capteur à information de position relative, tel qu'un système de navigation inertielle (ou INS pour Inertial Navigation System), et des données issues d'un capteur à information de position absolue, tel qu'un système de navigation par satellite (ou GNSS pour Global Navigation Satellites System).

Les systèmes de localisation utilisant une fusion, permettent de localiser un porteur mobile tel qu'un véhicule de manière robuste, même lorsque les conditions de réception du signal GNSS se dégradent. En effet, les signaux GNSS, de faible puissance sont susceptibles d'être perturbés par des interférences intentionnelles (brouillage) ou non (endroits non couverts par les signaux GNSS).

Le système de localisation utilisant une fusion INS/GNSS permet de compléter les informations manquantes du système satellitaire, en estimant les mouvements du véhicule à partir des mesures de ses accélérations (accéléromètre) et vitesses angulaires (gyromètre). Lorsque le signal satellitaire est perdu, une caractéristique importante de la trajectoire reconstruite à partir des capteurs est sa dérive en fonction du temps, causée par l'accumulation des erreurs de mesures.

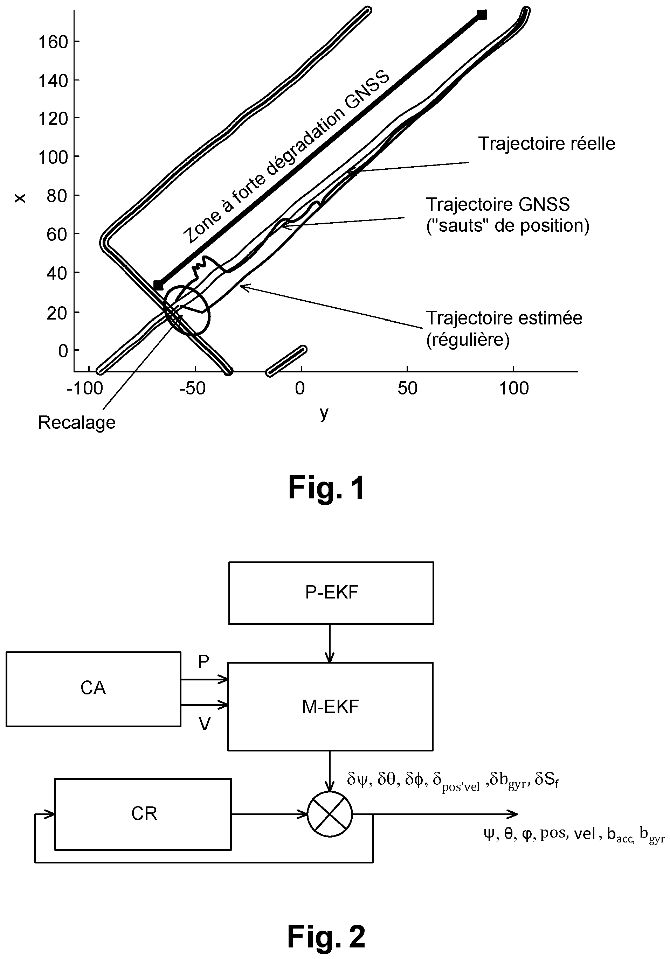

La figure 1 illustre cet effet en s'appuyant sur des mesures terrain. Lors de ce test, le porteur mobile le dispositif traverse une zone dans laquelle le signal GNSS est fortement dégradé, ce qui conduit l'algorithme de fusion à calculer la position dans cette zone à partir des mesures inertielles uniquement, entrainant une dérive de la trajectoire estimée par rapport à la trajectoire réelle. Lorsque le signal GNSS est récupéré, à la sortie de la zone dégradée, la trajectoire estimée subit un recalage important visible sur la figure 1.

Les recalages sont inhérents aux techniques de fusion et, bien qu'irréaliste puisque l'objet suivi ne peut effectuer des tels sauts de positions, la trajectoire estimée offre la meilleure précision absolue dans le cadre d'utilisation en temps réel.

En revanche, lorsque la trajectoire est calculée en temps différé, le recalage peut être anticipé et corrigé avant que la dérive ne se produise. En effet, pour certaines applications une trajectoire temps réel régulière, c'est-à-dire ne comprenant pas de corrections importantes, de même qu'une trajectoire en temps différé précise, sont nécessaires.

C'est par exemple le cas pour des applications de relevés topographiques pour lesquelles un objet mobile réalise un certain nombre de captures d'une scène qui sont ensuite traitées afin d'effectuer une reconstruction numérique de cette même scène, en particulier pour effectuer de la localisation et cartographie simultanées, également appelée SLAM (Simultaneous Localization And Mapping).

Les besoins afférents à cette reconstruction comportent deux aspects :

-    une reconstruction temps réel pour laquelle la régularité de la trajectoire (c'est à dire les différentes positions de l'objet effectuant la prise de vue) est essentielle pour les calculs de reconstruction. Cette reconstruction est effectuée de préférence en temps réel afin de limiter le volume de données à stocker ;

-    un géo-référencement précis de la scène reconstruite qui peut s'effectuer en temps différé, avec une cohérence nécessaire entre les images lors de la recombinaison des images.

Il est connu, dans l'état de la technique, des algorithmes de fusion GNSS/INS temps réel, et des algorithmes de fusion GNSS/INS en temps différé.

Les systèmes de navigation temps réel combinant les deux sous-systèmes inertiel INS (Inertial Navigation System) et GNSS (Global Navigation Satellite System), s'appuient sur un algorithme de fusion qui appartient classiquement à la famille des filtres de Kalman, comme décrit plus en détail dans [1], ou à ses nombreux dérivés tels que Extended Kalman Filter (EKF), Error-State Kalman Filter (ES-KF), Unscented Kalman Filter (UKF), Interacting Multiple-Models Kalman Filter (IMM-KF). Typiquement, ces algorithmes estiment la distribution d'un état, c'est-à-dire la valeur moyenne ainsi que la covariance associée d'un ensemble de variable d'intérêt.

Dans le cas présent, ce vecteur d'état peut être formé par exemple par la position, la vitesse, les angles d'attitude, ainsi que les biais des capteurs inertiels du système considéré.

Le plus souvent, afin d'optimiser les traitements, l'algorithme estime les erreurs des grandeurs citées précédemment afin de leur appliquer ensuite les corrections nécessaires. Il s'agit là d'une architecture particulière dite en boucle fermée (Closed Loop) (cf. [1], 916), utilisant une fusion lâche (Loose coupling) et illustrée sur la figure 2.

Dans cet exemple, le capteur à information de position relative CR, par exemple un système inertiel, calcule en continu une solution notamment composée d'une estimation d'attitude, de position et vitesse (solution dite APV), qui est ensuite comparée, pour ce qui concerne la position P et la vitesse V, à celles issues du capteur à information de position absolue CA, par exemple un récepteur GNSS.

Cette différence est injectée dans le filtre de Kalman (prédiction P-EKF et mise à jour M-EKF) qui calcule les corrections nécessaires à apporter aux grandeurs d'intérêts, mais aussi aux capteurs (biais, échelle etc.). Toutes ces corrections $\delta\psi$, $\delta\theta$, $\delta\varphi$, $\delta_{pos,vel}$, $\delta_{bacc}$, $\delta_{bgyr}$, $\delta S_f$ sont appliquées à la solution APV inertielle pour produire une solution APV corrigée $\psi$, $\theta$, $\varphi$, *pos, vel, b$_{acc}$, b$_{gyr}$*.

Dans la présente demande, une trajectoire correspond à une solution APV.

Dans cet exemple, le vecteur d'état $x_k^e$ à l'instant $t_k$, qui comprend toutes les grandeurs d'intérêt estimées, est formé par :

$$x_k^e = \begin{bmatrix} \delta\psi_{eb}^e \\ \delta v_{eb}^e \\ \delta r_{eb}^e \\ \delta b_a \\ \delta b_g \\ \delta s_r \end{bmatrix}$$

Dans lequel $\delta\psi_{eb}^e$ correspond aux trois corrections angulaires (plans x, y et z), $\delta v_{eb}^e$ correspond aux trois corrections de vitesse (plans x, y et z), $\delta r_{eb}^e$ correspond aux trois corrections de position (plans x, y et z), $\delta b_a$ correspond aux trois corrections des biais de l'accéléromètre (plans x, y et z), et $\delta b_g$ correspond aux trois corrections des biais du gyromètre (plans x, y et z).

En plus du calcul des corrections, l'algorithme estime également la covariance $P_k$ associée à la solution qui contient les précisions de l'ensemble des valeurs qui sont traquées sous la forme d'une matrice de dimensions m × m, où m représente la dimension du vecteur d'état.

Une autre architecture classique, non représentée ici mais reposant sur des principes identiques, utilise une boucle fermée mais une fusion serrée dite tight-coupling, pour laquelle ce sont les mesures brutes du récepteur (Pseudo-range et pseudo-range rate) qui sont comparées à une prédiction de ces mêmes valeurs à partir de la solution inertielle.

Ces algorithmes peuvent utiliser plusieurs définitions différentes pour les angles, positions et vitesses, selon le repère choisi (ECI, ECEF, ENU etc.), ainsi les angles estimés ne sont pas forcément les angles de roulis, tangage et lacet.

En plus des mesures inertielles et des mesures GNSS, l'algorithme peut également prendre en compte une grande variété d'autres sources d'information telles que des mesures issues d'un magnétomètre, d'un odomètre, d'un baromètre (altitude), etc.

Le point commun de toutes ces architectures et variantes, est qu'elles comportent schématiquement deux étapes, illustrées par la figure 2 :

- une étape de prédiction (P-EKF) où l'état précédent du système ainsi que la covariance associée sont extrapolés jusqu'au temps courant ;
- une étape de mise à jour (M-EKF) où les nouvelles mesures sont prises en compte par l'algorithme pour ajuster l'état courant du système ainsi que sa covariance associée.

L'organisation temporelle des traitements se décompose en deux ensembles opérant à des rythmes différents, le capteur à information de position relative CR (typiquement la centrale inertielle), et le filtre de Kalman (P-EKF et M-EKF sur la figure 2).

Le capteur à information de position relative CR fonctionne à la fréquence d'acquisition élevée de la centrale inertielle ($f_1$, généralement comprise entre 50 Hz et 2000 Hz, typiquement environ égale à 200 Hz pour certains systèmes de navigation inertielle). Les traitements sont donc initiés par la génération d'une nouvelle mesure effectuée par l'unité de mesure inertielle (mesure par l'accéléromètre et par le gyromètre) à l'instant $t_i$, qui est ensuite traitée en vue de mettre à jour les angles/position/vitesse de la solution APV.

A une fréquence moins élevée, généralement comprise entre 0,1 Hz et 20 Hz et typiquement égale à environ 10 Hz, les traitements du filtre de Kalman sont initiés par la mise à disposition d'une nouvelle mesure/information, hors centrale inertielle. Dans sa configuration la plus simple comprenant uniquement une centrale inertielle et un récepteur GNSS, celle-ci est constituée d'une mesure GNSS, mais pour des systèmes plus complexes elle peut également correspondre à au moins l'une des mesures suivantes : une mesure de distance Ultra Large Bande, une mesure odometrique, une mesure altimétrique, la détection d'une phase statique (qui n'est pas une « mesure » proprement dite, mais rentre dans la catégorie des « informations »), la prise en compte de contraintes de vitesse, ou encore une mesure radar.

S'agissant des algorithmes de fusion GNSS/INS en temps différé, la problématique de calcul d'une trajectoire fusionnée en temps différé est connue sous le nom de lissage optimal (« optimal smoother » en anglais).

L'une des techniques les plus répandues pour aborder ce problème est appelée « Rauch-Tung-Streibel Smoother », ou « RTS-Smoother », et décrite dans [2]. Cette technique consiste à retraiter l'ensemble des données (mesures INS, GNSS etc.) dans l'ordre des temps croissants (c'est-à-dire comme lors du traitement en temps réel) pour générer une première trajectoire, puis dans l'ordre des temps décroissants pour générer une seconde trajectoire, puis de calculer une solution qui combine les deux trajectoires.

Il existe de nombreuses variantes à ce procédé mais toutes requièrent de disposer des mesures brutes, ce qui implique de sauvegarder et de transférer une quantité importante de données (par exemple 12 à 1000 octets par instant de mesure, soit 144 kB à 12 MB pour 1 mn d'enregistrement à 200 Hz) ainsi qu'un traitement assez complexe de ces données.

L'approche proposée par [3] applique une méthode très similaire pour laquelle les données sont retraitées dans les sens direct et inverse à plusieurs reprises et sont ensuite combinées pour obtenir une trajectoire régulière. Cependant, cette méthode nécessite de disposer et de retraiter l'ensemble des mesures brutes, comme indiqué précédemment.

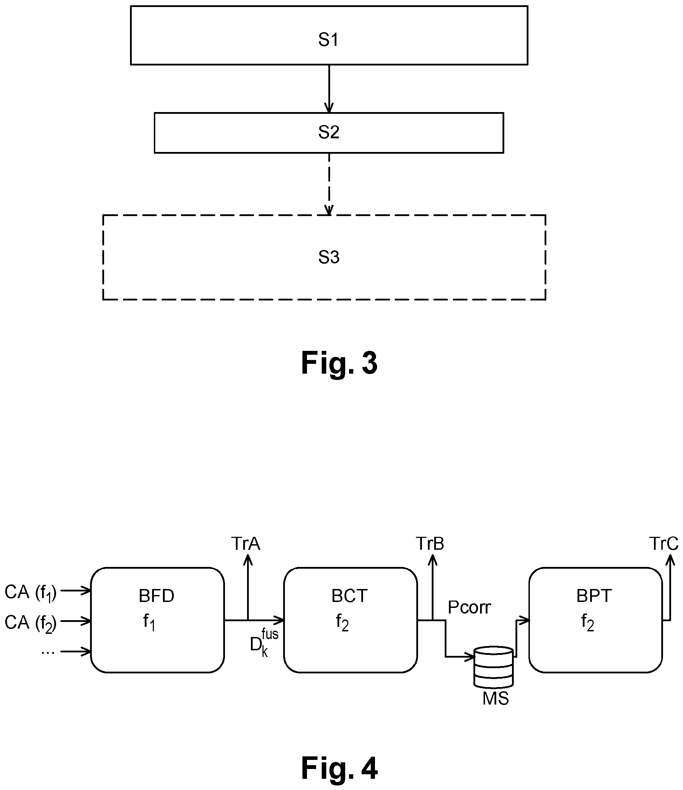

D'autres approches telles que [4] retraitent les positions enregistrées d'une trajectoire en ne sélectionnant que certaines positions afin que la trajectoire formée par les points sélectionnés vérifie un critère de régularité. Cette approche traite donc un nombre réduit de points mais n'effectue par une réelle correction des positions. En effet, seuls les points aberrants sont traités (cf. points blancs et noirs sur la figure 3 de [4]). Or, la dérive des positions issues des mesures INS par rapport à la trajectoire réelle est progressive, il n'y a donc pas de point aberrant sur la trajectoire calculée à partir des mesures INS. En outre, l'approche décrite dans [4] présente en outre l'inconvénient de réduire le nombre de points représentant la trajectoire.

L'invention vise ainsi à fournir un procédé de détermination d'une trajectoire d'un porteur mobile, qui calcule une trajectoire fusionnée en temps réel et régulière et une trajectoire en temps différé précise et régulière, tout en limitant le flux d'information ainsi que la capacité de sauvegarde nécessaire pour la trajectoire en temps différé.

**Résumé de l'invention**

Un objet de l'invention est donc un procédé de détermination d'une trajectoire d'un porteur mobile, comprenant les étapes suivantes :

S1) à chaque instant $t_i$, détermination d'une trajectoire fusionnée du porteur mobile, la trajectoire fusionnée étant obtenue par fusion de données fournies par au moins un capteur à information de position relative avec des données fournies par au moins un capteur à information de position absolue, et, à une pluralité d'instants déterminés $t_k$ parmi les instants $t_i$, génération d'un paquet de données fusionnées comprenant des données fusionnées à l'instant déterminé $t_k$ et au moins un indicateur de confiance associé au paquet de données de la position fusionnée à l'instant déterminé $t_k$, l'indicateur de confiance comprenant une information de précision des données fournies par le capteur à information de position absolue ;

S2) à chaque instant déterminé $t_k$, détermination d'une trajectoire régularisée en fonction de la détection d'un saut de position dans le paquet de données fusionnées entre l'instant sélectionné précédent $t_{k-1}$ et l'instant sélectionné $t_k$.

Avantageusement, le procédé comprend en outre une étape S3) de segmentation de la trajectoire régularisée en segments dits à forte confiance et en segments dits à non-forte confiance, la segmentation étant effectuée en fonction de l'indicateur de confiance associée au paquet de données fusionnées pour chaque instant déterminé $t_k$, et de détermination d'une trajectoire post-traitée, la trajectoire post-traitée correspondant à la trajectoire fusionnée pour chaque segment à forte confiance, et la trajectoire post-traitée étant déterminée, pour chaque segment à non-forte confiance, par une transformation géométrique du segment à non-forte confiance de telle sorte qu'une condition de continuité soit satisfaite entre chacune de ses extrémités et l'extrémité du segment à forte confiance adjacent.

Avantageusement, le capteur à information de position relative comprend une centrale inertielle.

Avantageusement, le capteur à information de position absolue comprend un récepteur GNSS supportant le mode RTK, l'indicateur de confiance étant fourni par la valeur RTK du récepteur GNSS, en particulier la valeur « RTK fix ».

Avantageusement, la première étape S1 comprend le calcul d'un indicateur de correction qui représente l'écart entre les données fournies par le capteur à information de position relative et les données fournies par le capteur à information de position absolue entre deux instants sélectionnés consécutifs $t_{k-1}$ et $t_k$.

Avantageusement, l'indicateur de correction est déterminé par la relation :

$$Icorr = \sum_{i=k-1}^{k} \|x_i\|$$

$x_i$ correspondant à une correction de trajectoire à un instant $t_i$.

Avantageusement, la détection d'un saut de position comprend la comparaison de l'indicateur de correction avec un seuil prédéterminé.

Avantageusement, la trajectoire régularisée est déterminée en appliquant une compensation à la position sur la trajectoire fusionnée (TrA) à l'instant déterminé $t_k$, la compensation étant déterminée de façon itérative par la relation suivante :

$$\Delta_k = \Delta_{k-1} + \delta_k$$

$\Delta_k$ correspondant à la compensation à l'instant déterminé $t_k$, $\Delta_{k-1}$ correspondant à la compensation à l'instant déterminé précédent $t_{k-1}$, $\delta_k$ correspondant à une correction à l'instant déterminé $t_k$ déterminée par la relation suivante :

$$\delta_k = \begin{cases} 0 & \text{si pas de saut détecté} \\ p_k^{fus} - p_{k-1}^{fus} & \text{si un saut est détecté} \end{cases}$$

$p_k^{fus}$ correspondant à la position sur la trajectoire fusionnée (TrA) à l'instant déterminé $t_k$ ; $p_{k-1}^{fus}$ correspondant à la position sur la trajectoire fusionnée (TrA) à l'instant déterminé précédent $t_{k-1}$.

Avantageusement, le seuil prédéterminé est déterminé en fonction de la qualité du capteur à information de position relative.

Avantageusement la transformation géométrique comprend au moins une translation ou une rotation.

Avantageusement, la transformation géométrique comprend en outre une homothétie lorsque le segment à non-forte confiance est précédé ou suivi d'un segment à forte confiance.

Avantageusement, la transformation géométrique ($g_m$) appliquée à une position p sur le segment à non-forte confiance ($S_1^{NFC}$) est définie par la relation :

$$g_m(p) = H_m R_m \left( p - p_{k_m}^{reg} \right) + p_{k_m}^{corr}$$

$p_{k_m}^{corr}$ correspondant au premier point appartenant au segment à non-forte confiance, qui coïncide avec le point précédent $p_{k_m-1}^{fus}$ qui appartient au segment à forte confiance voisin ; $p_{k_m}^{reg}$ correspondant au premier point du segment sur la trajectoire régularisée TrB ; $H_m$ correspondant au coefficient d'homothétie :

$$H_m = \frac{\left\| p_{k_m}^{reg} - p_{k_{m+1}}^{reg} \right\|}{\left\| p_{k_{m-1}}^{fus} - p_{k_{m+l+1}}^{fus} \right\|}$$

$p_{k_{m+1}}^{reg}$ correspondant au dernier point du segment sur la trajectoire régularisée TrB ; $p_{k_{m-1}}^{fus}$ correspondant au dernier point du segment à forte confiance précédent le segment à non-forte confiance, $p_{k_{m+l+1}}^{fus}$ correspondant au premier point du segment à forte confiance suivant le segment à non-forte confiance ;

Avec $R_m$ définie par :

$$R_m = \begin{bmatrix} \cos\varphi & \sin\varphi & 0 \\ -\sin\varphi & \cos\varphi & 0 \\ 0 & 0 & 1 \end{bmatrix}$$

L'angle de la rotation $\varphi$ étant calculé par les relations :

$$u = \begin{bmatrix} 0 & 0 & 1 \end{bmatrix}^T$$

$$x = \left( p_{k_m}^{reg} - p_{k_{m+1}}^{reg} \right)$$

$$y = \left( p_{k_{m-1}}^{fus} - p_{k_{m+l+1}}^{fus} \right)$$

$$z = x \otimes y$$

$$c = signe(z^T u).\|z\|$$

$$\varphi = atan(c, x^T y)$$

Avec $\otimes$ le produit vectoriel et $x^T$ l'opérateur transposé.

Avantageusement, l'étape S3 comprend en outre une recombinaison pondérée de la trajectoire fusionnée et de la trajectoire post-traitée.

Avantageusement, les étapes S1 et S2 sont exécutées en temps réel durant le déplacement du porteur mobile, et l'étape S3 est exécutée en temps différé.

L'invention se rapporte également à un système de détermination d'une trajectoire d'un porteur mobile, comprenant :

- un dispositif mobile, embarqué sur le porteur mobile, comprenant au moins un capteur à information de position relative et au moins un capteur à information de position absolue, le dispositif mobile étant configuré pour, à chaque instant $t_i$, déterminer une trajectoire fusionnée du porteur mobile, la trajectoire fusionnée étant obtenue par fusion de données fournies par le capteur à information de position relative avec des données fournies par le capteur à information de position absolue, et, à une pluralité d'instants déterminés $t_k$ parmi les instants $t_i$, générer un paquet de données fusionnées comprenant des données fusionnées à l'instant déterminé $t_k$ et au moins un indicateur de confiance associé au paquet de données de la position fusionnée à l'instant déterminé $t_k$, l'indicateur de confiance comprenant une information de précision des données fournies par le capteur à information de position absolue ;

- un dispositif fixe, configuré pour déterminer, à chaque instant déterminé $t_k$, une trajectoire régularisée en fonction de la détection d'un saut de position du porteur mobile dans le paquet de données fusionnées entre l'instant déterminé précédent $t_{k-1}$ et l'instant déterminé $t_k$.

Avantageusement, le dispositif fixe est, en outre, configuré pour segmenter la trajectoire corrigée en segments dits à forte confiance et en segments dits à non-forte confiance, la segmentation étant effectuée en fonction de l'indicateur de confiance associé au paquet de données pour chaque instant déterminé $t_k$, et pour déterminer une trajectoire post-traitée, la trajectoire post-traitée correspondant à la trajectoire fusionnée pour chaque segment à forte confiance, et la trajectoire post-traitée étant déterminée, pour chaque segment à non-forte confiance, par une transformation géométrique du segment à non-forte confiance de telle sorte qu'une condition de continuité soit satisfaite entre chacune de ses extrémités et l'extrémité du segment à forte confiance adjacent.

Avantageusement, le dispositif mobile et le dispositif fixe sont connectés entre eux par une liaison radio.

**Description des figures**

D'autres caractéristiques, détails et avantages de l'invention ressortiront à la lecture de la description faite en référence aux dessins annexés donnés à titre d'exemple.

La figure 1, déjà décrite, représente un exemple de recalage de trajectoire après une dérive de la position.

La figue 2, déjà décrite, représente un exemple d'architecture de fusion de données.

La figure 3 est un schéma bloc qui représente les principales étapes du procédé selon l'invention.

La figure 4 représente schématiquement les différents blocs de traitement pour mettre en oeuvre le procédé selon l'invention.

La figure 5 est un schéma bloc qui représente les sous-étapes de la première étape du procédé selon l'invention.

La figure 6 est un schéma bloc qui représente les sous-étapes de la deuxième étape du procédé selon l'invention.

La figure 7 est un schéma bloc qui représente les sous-étapes de la troisième étape du procédé selon l'invention.

La figure 8 illustre le principe de correction de la trajectoire régulière.

La figure 9 illustre un exemple d'implémentation du système selon l'invention.

Les principales étapes du procédé selon l'invention sont décrites en lien avec les figures 3 et 4.

**Première étape S1**

Le procédé comprend une première étape S1), qui comprend la détermination d'une trajectoire fusionnée TrA du porteur mobile à chaque instant $t_i$. La trajectoire fusionnée TrA est obtenue par fusion de données fournies par au moins un capteur à information de position relative CR avec des données fournies par au moins un capteur à information de position absolue CA.

Selon un mode de réalisation, le capteur à information de position relative CR est une unité de navigation inertielle, et le capteur à information de position absolue CA est un récepteur de navigation par satellite.

D'autres types de capteur peuvent être envisagés, sous réserve qu'une fusion de données entre les capteurs puisse être effectuée, que le capteur à information de position absolue CA puisse fournir des informations de navigation à la précision souhaitée, et que le capteur à information de position relative CR puisse fournir en permanence des informations de positionnement, c'est-à-dire même lorsque le capteur à information de position absolue CA n'est pas en mesure de fournir une information de localisation.

Par exemple, le capteur à information de position absolue CA peut être un récepteur de signaux GNSS, un terminal émetteur/récepteur d'ondes radio de type UWB, WiFi, ou 4G/5G ou tout autre technologie équivalente. Le capteur à information de position relative CR peut être un odomètre, ou encore un capteur de flux optiques.

Plus généralement, on appelle capteur à information de position absolue CA un capteur qui s'appuie sur un élément externe (par exemple un satellite, ou une station de télécommunications). A contrario, on appelle capteur à information de position relative CR capteur qui ne s'appuie pas sur un élément externe, susceptible ainsi de fournir une erreur de position qui croit en fonction du temps.

Il est également possible d'exploiter des contraintes liées à la nature du porteur mobile, par exemple un véhicule terrestre dont la position peut n'être caractérisée que selon deux dimensions, ou encore un train, dont la trajectoire comprend des contraintes liées à la voie ferrée empruntée.

La première étape S1 peut être implémentée par un bloc BFD qui génère la trajectoire fusionnée TrA en temps réel à une fréquence $f_1$, qui correspond à la fréquence de génération des informations de position du capteur à information de position relative CR (cf. figure 4).

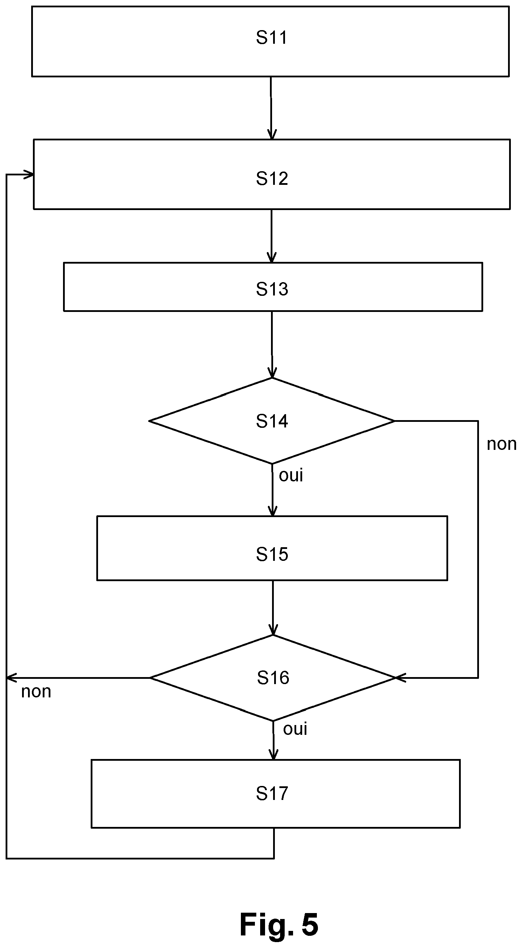

La figure 5 illustre plus en détail les sous-étapes de la première étape du procédé selon l'invention.

La première sous-étape S11 consiste à obtenir une initialisation de la solution APV, selon les techniques connues de l'homme du métier.

La deuxième sous-étape S12 consiste à recevoir des mesures issues d'un capteur à information de position relative CR tel qu'une centrale inertielle (trois valeurs d'accélération fournies par un accéléromètre, trois valeurs de vitesse de rotation fournies par un gyromètre), à chaque instant de mesure $t_i$.

Pour chaque instant de mesure $t_i$ l'algorithme calcule en temps réel une solution inertielle APV(i) selon les techniques connues de l'homme du métier (troisième sous-étape S13).

A chaque instant de mesure $t_i$, le bloc BFD détermine si des mesures issues du capteur à information de position

7

absolue CA tel qu'un système GPS (exemples position, vitesse, mesures brutes de pseudo-range) ont été reçues (sous-étape S14).

Si c'est le cas, une solution inertielle corrigée APV(i) est calculée selon les techniques connues de l'homme du métier (sous-étape S15). La trajectoire fusionnée TrA du porteur mobile est ainsi déterminée à chaque instant de mesure $t_i$ sur la base de la solution inertielle corrigée APV(i).

La sous-étape S16 consiste à déterminer si la solution inertielle corrigée APV(i) calculée à l'instant de mesure $t_i$ appartient à l'ensemble d'instants déterminés $t_k$ parmi les instants $t_i$. Cette sous-étape est également mise en oeuvre tant qu'aucune mesure issue du capteur à information de position absolue CA n'a été reçue.

La détermination des instants $t_k$ peut être mise en oeuvre par décimation du comptage des instants de mesure $t_i$, à l'aide d'un compteur de décimation qui peut rechargé à une valeur prédéterminée Ndec, par exemple comprise entre 1 et 1000, de préférence égale à 200, et qui est décrémentée d'une unité à chaque instant de mesure $t_i$. Lorsque le compteur atteint la valeur 0, celui-ci est rechargé et la sous-étape S17 est exécutée.

La sous-étape S17 consiste à générer un paquet de données fusionnées $D_k^{fus}$ comprenant des données fusionnées à l'instant déterminé $t_k$ et au moins un indicateur de confiance $c_k^{fus}$ associé au paquet de données de la position fusionnée à l'instant déterminé $t_k$.

Le paquet de données contient par exemple : le temps $t_k$, la position $p_k^{fus}$, la vitesse $v_k^{fus}$, les angles $a_k^{fus}$, un ou plusieurs indicateurs de confiance Iconf, un indicateur de correction Icorr. Certaines variables sont vectorielles et peuvent donc comprendre donc plusieurs valeurs. Etant donné que l'invention vise à compenser des écarts de position, il est essentiel que le paquet de données comprenne la position $p_k^{fus}$. En variante, l'ensemble des valeurs APV peut être transmis. L'indicateur de confiance $c_k^{fus}$ comprend une information de précision des données fournies par le capteur à information de position absolue CA.

Selon un mode de réalisation dans lequel le capteur à information de position absolue comprend un récepteur GNSS supportant le mode RTK, l'indicateur de confiance $c_k^{fus}$ est fourni par la valeur RTK du récepteur GNSS, en particulier la valeur « RTK fix ».

Le RTK (« Real Time Kinematic ») est une technique GNSS qui permet d'atteindre des précisions centimétriques mais qui suppose de recevoir des données de corrections. Celles-ci sont généralement calculées et transmises depuis une base fixe située à proximité (généralement à une distance inférieure à 10 km) .

Le RTK utilise un algorithme mathématique de résolution d'ambiguïté pour calculer le nombre exact de longueurs d'onde radio entre les satellites et l'antenne de la station au sol et produire une solution fixe ou flottante. Dans une solution fixe, le nombre de longueurs d'onde est un nombre entier, ce qui permet de fournir une précision centimétrique. Dans une solution flottante (« RTK float »), l'algorithme ne fournit pas de solution fixe acceptable, donc l'ambiguïté est autorisée à être un nombre décimal ou à virgule flottante. La précision est généralement sub-métrique. Dans un mode de fonctionnement non RTK (« no RTK », aussi appelé « stand alone »), l'ordre de grandeur de la précision est métrique.

De nombreux autres indicateurs de confiance peuvent être calculés, tels que, par exemple, des indicateurs établis à partir des coefficients de la matrice de covariance de la solution calculée par le filtre de Kalman.

Selon un mode de réalisation, l'indicateur de correction représente l'écart entre les données fournies par le capteur à information de position relative et les données fournies par le capteur à information de position absolue entre deux instants sélectionnés consécutifs $t_{k-1}$ et $t_k$.

En particulier, l'indicateur de correction est égal à la somme des normes des corrections de trajectoire effectuées à chaque instant $t_i$ entre deux instants sélectionnés consécutifs $t_{k-1}$ et $t_k$, d'après la formule :

$$Icorr = \sum_{i=k-1}^{k} \|x_i\|$$

$x_i$ étant ici une composante du vecteur d'état xk défini précédemment, qui peut avantageusement être la composante de correction de la position selon au moins une des trois dimensions.

De nombreux autres indicateurs de corrections peuvent être calculés, tels que par exemple une somme des normes qui ne porterait que sur certaines composantes de la correction $x_i$ , telles que les composantes de vitesse, une distance entre deux positions successives, une statistique (écart moyen, variance etc.) portant sur la distance entre des positions successives établie pour l'ensemble des positions calculées entre deux paquets transmis, ou encore la détection de phénomènes particuliers (détection de glissement d'odomètres, perte du signal GNSS, saturation des capteurs, perte de données, etc.).

Il peut être noté qu'une variante de la décimation du comptage des instants de mesure $t_i$ (sous-étape S16) consiste à calculer le temps écoulé depuis la dernière exécution de la sous-étape S17 : si ce temps dépasse une durée prédéterminée, la sous-étape S17 est exécutée. Selon une autre variante, la sous-étape S17 peut être exécutée pour chaque correction de la position inertielle (déclenchée par la réception d'une mesure GNSS par exemple).

La trajectoire fusionnée TrA, déterminée par le bloc BFD (figure 4), est dite précise et non régulière car les informations de navigation sont générées à haute fréquence mais avec des sauts dans la trajectoire en raison du recalage.

#### Deuxième étape S2

Le procédé comprend une deuxième étape S2 de détermination d'une trajectoire régularisée TrB en fonction de la détection d'un saut de position dans le paquet de données fusionnées $D_k^{fus}$ entre l'instant sélectionné précédent $t_{k-1}$ et l'instant sélectionné $t_k$.

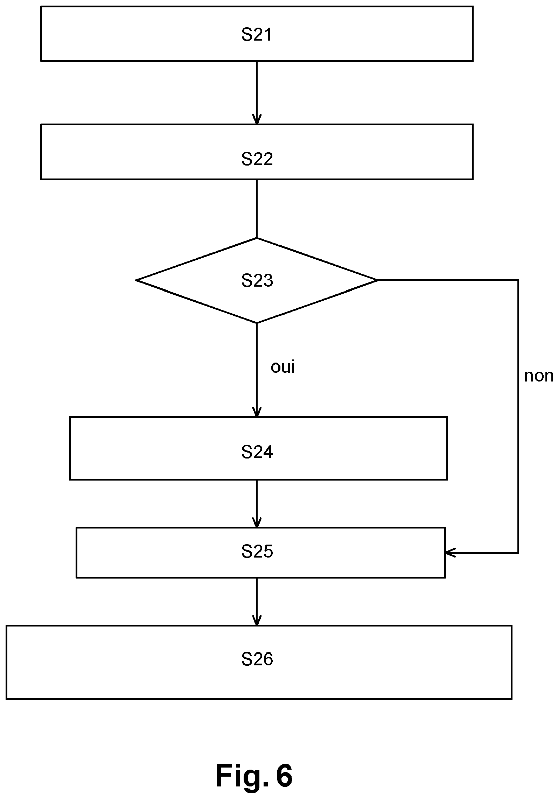

Certains modes de réalisation de la deuxième étape sont décrits plus en détail à la figure 6.

Dans une première sous-étape S21, une variable $\Delta_k$, qui contient l'accumulation de toutes des corrections de régularisation, est initialisée à $\Delta_k = [0\ 0\ 0]^T$.

La deuxième sous-étape S22 consiste à recevoir le paquet de données fusionnées $D_k^{fus}$ comprenant des données fusionnées à l'instant déterminé $t_k$, au moins un indicateur de confiance $c_k^{fus}$ associé au paquet de données de la position fusionnée à l'instant sélectionné $t_k$, et éventuellement un indicateur de correction.

La détection d'un saut de position comprend avantageusement la comparaison de l'indicateur de correction contenu dans le paquet de données avec un seuil prédéterminé *Tsaut* (sous-étape S23) :

Icorr > Tsaut

Par exemple, le seuil prédéterminé Tsaut peut être compris entre 0,01 et 10, cette valeur pouvant être déterminée en fonction de la précision souhaitée.

Selon un mode de réalisation avantageux, le seuil prédéterminé *Tsaut* est déterminé en fonction de la qualité du capteur à information de position relative. En effet, avec une centrale inertielle de très bonne qualité, il peut être utile de fixer un seuil Tsaut relativement faible, ce qui implique une faible tolérance aux dérives de la centrale inertielle. A contrario, avec une centrale inertielle de qualité moindre, il peut être utile de fixer un seuil Tsaut relativement élevé, ce qui implique une forte tolérance aux dérives de la centrale inertielle.

En variante, la condition de détection d'un saut de position peut porter sur la violation successive des seuils, une violation de plusieurs seuils simultanément (par exemple un seuil lié à la somme des normes de correction de la position et un seuil lié à la somme des normes de correction de la vitesse, les deux seuils devant être tous deux dépassés) ou bien indifférenciée (le dépassement d'un des deux seuils).

La trajectoire régularisée TrB peut être déterminée en appliquant la compensation $\Delta_k$ à la position $p_k^{fus}$ sur la trajectoire fusionnée TrA à l'instant sélectionné $t_k$, la compensation étant déterminée de façon itérative par la relation suivante :

$$\Delta_k = \Delta_{k-1} + \delta_k$$

$\Delta_k$ correspondant à la compensation à l'instant déterminé $t_k$, $\Delta_{k-1}$ correspondant à la compensation à l'instant déterminé $t_{k-1}$, $\delta_k$ correspondant à une correction à l'instant sélectionné $t_k$ déterminée par la relation suivante :

$$\delta_k = \begin{cases} 0 & \text{si pas de saut détecté} \\ p_k^{fus} - p_{k-1}^{fus} & \text{si un saut est détecté} \end{cases}$$

$p_k^{fus}$ correspondant à la position sur la trajectoire fusionnée TrA à l'instant déterminé $t_k$ ;

$p_{k-1}^{fus}$ correspondant à la position sur la trajectoire fusionnée TrA à l'instant déterminé $t_{k-1}$.

Ainsi, sur la figure 6, la sous-étape S24 consiste à mettre à jour la compensation $\delta_k$ si un saut a été détecté à la sous-étape S23. Dans ce cas, $\delta_k =$

$$p_k^{fus} - p_{k-1}^{fus}.$$

$$\Delta_k = \Delta_{k-1} + p_k^{fus} - p_{k-1}^{fus}$$

. Ainsi,

A contrario, si aucun saut de position n'a été détecté, la compensation ne change pas, et $\Delta_k = \Delta_{k-1}$.

Ainsi, dans une cinquième sous-étape S25, la position régularisée de la trajectoire régularisée TrB est calculée en appliquant une compensation $\Delta_k$ à la position $p_k^{fus}$, par la relation suivante :

$$p_k^{reg} = p_k^{fus} + \Delta_k$$

Finalement, la position $p_k^{fus}$ de la trajectoire fusionnée TrA, la position $p_k^{reg}$ de la trajectoire régularisée TrB, la correction $\delta_k$, l'indicateur de confiance $c_k^{fus}$, ainsi que toutes les autres données ($t_k$, $v_k^{fus}$, $a_k^{fus}$) sont sauvegardés en vue du post-traitement (sous-étape S26).

L'application de la correction $\delta_k$ a pour effet d'annuler complètement le déplacement entre les instants sélectionnés $t_{k-1}$ et $t_k$, ce qui a pour conséquence que la position reste identique entre ces deux instants. En variante, l'annulation complète peut être suivie d'une substitution par un déplacement probable, calculé par exemple en fonction du déplacement précédent entre les instants sélectionnés $t_{k-2}$ et $t_{k-1}$, ou tout autre déplacement antérieur.

La deuxième étape S2 peut être implémentée par un bloc de correction de la trajectoire BCT, qui génère la trajectoire régularisée TrB en temps réel (figue 4).

La trajectoire régularisée TrB est dite régulière et non précise car il y a une cohérence entre les différentes positions de la trajectoire, mais elle ne correspond pas à la trajectoire précisément estimée (les sauts de position ayant été compensés).

La combinaison des deux premières étapes S1 et S2 permet de calculer une trajectoire en temps réel qui soit, dépourvue de sauts, c'est-à-dire de discontinuités fortes selon la valeur du seuil de détection de sauts fixée, mais également aussi précise que possible même dans un environnement GNSS dégradé, grâce à la fusion des données issues des capteurs à information de position absolue et des capteurs à information de position relative (fusion GNSS/INS par exemple).

La trajectoire régularisée TrB peut s'avérer très utile pour l'assemblage de différentes prises de vues (photogrammétrie, imagerie radar), qui requiert des positions relatives entre les différentes prises de vue très précises, ce qui n'est pas le cas en présence d'une forte correction.

## Troisième étape S3

Le procédé selon l'invention comprend une troisième étape facultative. Elle consiste à calculer une trajectoire post-traitée TrC à partir de la trajectoire fusionnée TrA, de la trajectoire régularisée TrB, et des indicateurs de confiance (cf. figure 4).

Pour cela, à chaque instant déterminé $t_k$, la trajectoire régularisée TrB est découpée en segments à forte confiance $S_m^{FC}$, et en segments à non-forte confiance $S_m^{NFC}$. Par « segment », on entend une portion de trajectoire. Le découpage est effectué en fonction de l'indicateur de confiance $c_k^{fus}$ associée au paquet de données fusionnées $D_k^{fus}$ pour chaque instant sélectionné $t_k$. La trajectoire post-traitée TrC correspond à la trajectoire fusionnée TrA pour chaque segment à forte confiance $S_m^{FC}$, c'est-à-dire la solution APV de la trajectoire fusionnée TrA. De plus, pour chaque segment à non-forte confiance $S_m^{NFC}$, la trajectoire post-traitée TrC est déterminée par une transformation géométrique du segment à non-forte confiance $S_m^{NFC}$ de telle sorte qu'une condition de continuité soit satisfaite entre chacune de ses extrémités et l'extrémité du segment à forte confiance adjacent.

Ainsi, la trajectoire post-traitée TrC est régulière en temps réel et régulière et précise en temps différé en post-traitement.

La transformation géométrique est permet d'améliorer les performances du procédé, et ses avantages sont les suivants :

- elle ne requiert pas de carte ni d'information supplémentaire (autres que celles déjà acquises) pour réaliser l'ajustement

- pour les segments à non-forte confiance (non recalés par GNSS), la dérive de la position est une conséquence des imprécisions des capteurs relatifs (inertiels, odomètre etc.). Or, il a été observé en pratique que, dans un contexte de fusion, ces imprécisions conduisent principalement à une erreur de cap (d'angle) et de distance parcourue (facteur d'échelle). De plus, pour des durées de dérive raisonnable (1s à 1h selon le type de capteurs utilisés), ces erreurs sont relativement stables. La transformation proposée cible donc ces erreurs en ne corrigeant que des erreurs de cap et de longueur, tout en préservant la forme générale de la trajectoire.

- elle garantit la régularité en tous points et en particularité la continuité entre les segments.

- elle ne nécessite pas le retraitement de données brutes (IMU etc.), ces données n'étant pas disponibles ;

- elle est très légère en coût de calcul

Le procédé selon l'invention permet de limiter considérablement le débit nécessaire entre le porteur mobile et le système fixe chargé de calculer la trajectoire post-traitée, ce qui offre également une meilleure robustesse en cas de perte de données lors de la transmission.

A titre d'exemple, l'utilisation des techniques de l'état de l'art pour le calcul la trajectoire en temps différé nécessiterait de stocker les données brutes des capteurs et de les transmettre du dispositif mobile où elles seraient acquises, vers le moyen de calcul (un ordinateur) où elles seraient traitées. Selon cet exemple, un lien radio offrant un débit utile compris entre 38,4 kb/s (trois données d'accéléromètre, trois données de gyromètre, codées sur quatre octets, avec une fréquence d'acquisition égale à 200 Hz) ou 200 kb/s (avec plus de capteurs) serait nécessaire. De plus, la perte de données lors de la transmission aurait un effet important sur la reconstruction de la trajectoire car cela entraînerait des erreurs lors du calcul de la solution inertielle.

Le procédé selon l'invention permettrait d'utiliser un lien radio à 0,9 kb/s ou 3,84 kb/s selon que la position seule est transmise, ou l'ensemble de la solution APV.

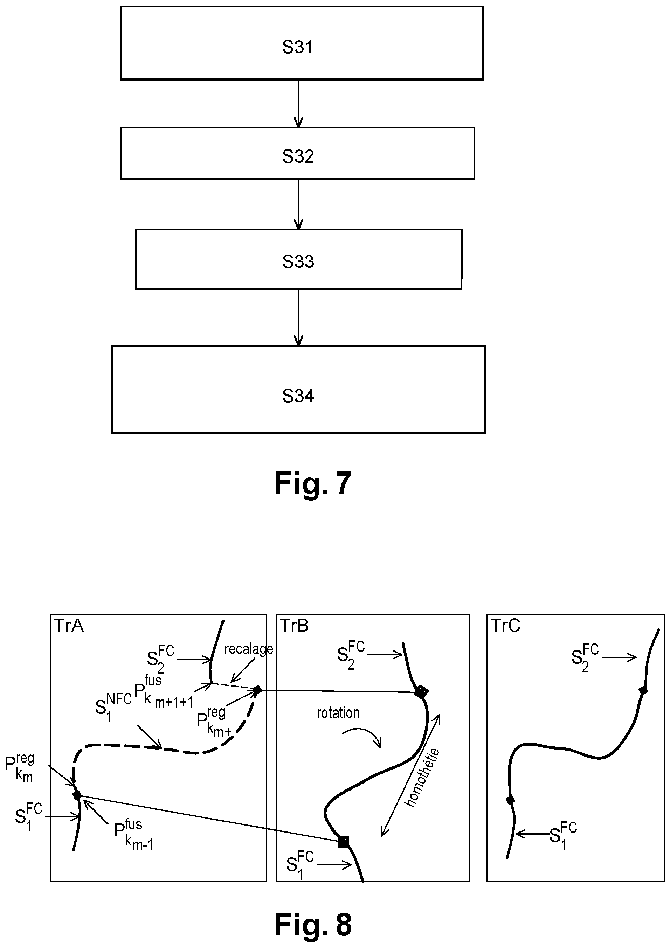

La figure 7 illustre certains modes de réalisation de la troisième étape S3.

Dans une première sous-étape S31, les paquets, ou points de la trajectoire, stockés dans le moyen de sauvegarde MS, sont fournis au bloc de traitement de la trajectoire BPT (figure 4).

Dans une deuxième sous-étape S32, la trajectoire régularisée TrB est découpée en segments à forte confiance $S_m^{FC}$, et en segments à non-forte confiance $S_m^{NFC}$.

Selon un mode de réalisation dans lequel le capteur à information de position absolue CA comprend un récepteur GNSS supportant le mode RTK, les paquets pour lesquels l'indicateur de confiance $c_k^{fus}$ correspond à la valeur « RTK fix » (avec plus ou moins une marge de tolérance) sont classés en tant que segments à forte confiance $S_m^{FC}$, et les paquets dont l'indicateur de confiance $c_k^{fus}$ est trop éloigné de la valeur « RTK fix » (i.e. indicateur de confiance $c_k^{fus}$ différent de la valeur « RTK fix » avec plus ou moins la marge de tolérance) sont classés en tant que segments à non forte confiance $S_m^{NFC}$ .

En variante, la segmentation peut être effectuée sans connaissance de la valeur RTK. En particulier, l'indicateur de confiance $c_k^{fus}$ peut être comparé à un seuil. Des critères de tests supplémentaires peuvent être ajoutés, tels que la comparaison de l'indicateur de confiance $c_k^{fus}$ avec plusieurs seuils, ou encore le fait qu'un nombre suffisant de points consécutifs doivent respecter une condition pour être classé en tant que segment à forte confiance $S_m^{FC}$ .

Dans une troisième sous-étape S33, les positions corrigées sont calculées pour l'ensemble des points de chaque segment à non-forte confiance $S_m^{NFC}$ , comme l'illustre la figure 8.

Les points appartenant à un segment à non-forte confiance $S_m^{NFC}$ sont classés en sous-groupes de points consécutifs (dans le temps, selon les instants déterminés $t_k$) formant ainsi M segments de trajectoire $S_m^{NFC}$ représentés par leurs indices :

$$S_m^{NFC} = \{k_m, (k+1)_m, ..., (k+l)_m\}$$

Le premier point du segment $S_m^{NFC}$ a l'indice $k_m$ et le dernier point du segment a l'indice $(k+l)_m$.

Par exemple, sur la figure 8, la condition de continuité entre chacune des extrémités du segment à non-forte confiance et l'extrémité du segment à forte confiance adjacent implique que la position $p_{k_m}^{reg}$ doit coïncider avec la position $p_{k_{m-1}}^{fus}$ , et la position $p_{k_{m+l}}^{reg}$ doit coïncider avec la position $p_{k_{m+l+1}}^{fus}$ .

Tous les points de la trajectoire régulière du même segment $S_m^{NFC}$ se voient appliquer une même transformation géométrique $g_m$ , pour calculer des positions corrigées $p_k^{corr}$ :

$$p_k^{corr} = g_m(p_k^{reg}), k \in NFC$$

La transformation géométrique $g_m$ du segment $S_m^{NFC}$ est calculée de telle sorte que le segment $S_m^{NFC}$ coïncide en ses deux extrémités ( $p_{k_m}^{reg}, p_{k_{m+l}}^{reg}$ ) avec les points des segments voisins à forte confiance ( $p_{k_{m-1}}^{fus}, p_{k_{m+l+1}}^{fus}$ ). Précisément, et comme l'illustre la figure 8, il faut donc que le premier point $p_{k_m}^{reg}$ appartenant au segment $S_m^{NFC}$ coïncide avec le point précédent $p_{k_{m-1}}^{fus}$ , du segment à forte confiance précédent, et que le dernier point $p_{k_{m+l}}^{reg}$ appartenant au segment $S_m^{NFC}$ coïncide avec le point suivant $p_{k_{m+l+1}}^{fus}$ , du segment à forte confiance suivant.

Ainsi, la condition de continuité peut s'écrire :

$$\begin{cases} p_{k_m}^{corr} = p_{k_{m-1}}^{fus} \\ p_{k_m+l}^{corr} = p_{k_{m+l+1}}^{fus} \end{cases}$$

Avantageusement, la transformation géométrique comprend au moins une translation ou une rotation, ainsi qu'une homothétie lorsque le segment à non-forte confiance est précédé ou suivi d'un segment à forte confiance. Ainsi, en début ou en fin de trajectoire, seule la translation ou la rotation peuvent être appliquées.

Ces transformations géométriques appliquées à une position *p* sont définies de la façon suivante :

$$g_m(p) = H_m R_m \big( p - p_{k_m}^{reg} \big) + p_{k_m}^{corr}$$

$p_{k_m}^{corr}$ correspond au dernier point du segment à forte confiance.

$$p_{k_m}^{corr} = p_{k_{m-1}}^{fus}$$

Avec $H_m$ le coefficient d'homothétie

$$H_m = \frac{\left\| p_{k_m}^{reg} - p_{k_{m+l}}^{reg} \right\|}{\left\| p_{k_{m-1}}^{fus} - p_{k_{m+l+1}}^{fus} \right\|}$$

$R_m$ est une matrice de rotation calculée de telle sorte que l'équation $p_{k_m+l}^{corr} = p_{k_{m+l+1}}^{fus}$ soit vérifiée.

$$R_m = \begin{bmatrix} \cos\varphi & \sin\varphi & 0 \\ -\sin\varphi & \cos\varphi & 0 \\ 0 & 0 & 1 \end{bmatrix}$$

L'angle de la rotation $\varphi$ est calculé comme suit :

$$\begin{aligned} u &= \begin{bmatrix} 0 & 0 & 1 \end{bmatrix}^T \\ x &= \left( p_{k_m}^{reg} - p_{k_{m+1}}^{reg} \right) \\ y &= \left( p_{k_{m-1}}^{fus} - p_{k_{m+l+1}}^{fus} \right) \\ z &= x \otimes y \\ c &= signe(z^T u).\|z\| \\ \varphi &= atan(c, x^T y) \end{aligned}$$

Avec $\otimes$ le produit vectoriel et $x^T$ l'opérateur transposé.

La condition de continuité a été définie avec des transformations géométriques sur les positions de la solution APV de la trajectoire estimée. D'autres transformations géométriques peuvent être envisagées, par exemple en prenant aussi en compte la vitesse et les angles issus de la fusion.

La quatrième sous-étape S34 consiste ensuite à reconstituer la trajectoire post-traitée TrC (constituée des positions $p_k^{pp}$ ) à partir des positions fusionnées et des positions corrigées.

Ainsi, pour chaque segment à forte confiance $S_m^{FC} : p_k^{pp} = p_k^{fus}$

Pour chaque segment à non-forte confiance $S_m^{NFC} : p_k^{pp} = p_k^{corr}$

Selon un mode de réalisation, la sous-étape S34 comprend en outre une recombinaison pondérée de la trajectoire fusionnée TrA et de la trajectoire post-traitée TrC.

La combinaison pondérée des positions peut être exprimée par la relation suivante :

$$p_k^{pp} = \omega p_k^{fus} + (1 - \omega)p_k^{corr}$$

$\omega$ est un scalaire compris entre 0 et 1.

. La combinaison pondérée permet de limiter l'effet provoqué par une forte proximité entre le point de départ et le point d'arrivée de la trajectoire post-traitée. En effet, lorsque la trajectoire forme une « boucle », une toute petite erreur sur la position des points de départ / d'arrivée est démultipliée par la transformation géométrique et les points au milieu de la boucle peuvent être fortement erronés. La combinaison pondérée des positions permet d'éviter de telles erreurs.

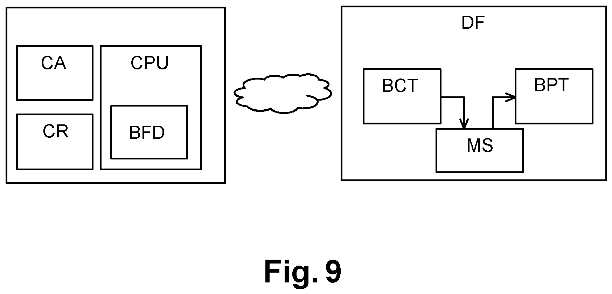

L'invention se rapporte également à un système apte à mettre en oeuvre le procédé prédéfini. Le système, illustré par la figure 9, comprend avantageusement un dispositif mobile DM à localiser et configuré pour calculer la trajectoire fusionnée TrA en temps réel. Pour cela, il comprend un capteur à information de position absolue CA, un capteur à information de position relative CR, et une unité de calcul CPU comprenant un bloc de fusion de données BFD. Le système comprend, en outre, un dispositif fixe DF, comprenant un bloc de correction de trajectoire BCT pour calculer la trajectoire régularisée TrB en temps réel, et un bloc de post-traitement BPT pour calculer la trajectoire post-traitée TrC en temps différé. Un moyen de sauvegarde MS, disposé dans le dispositif fixe DF, permet de stocker les paquets de données avant le post-traitement.

### Références bibliographiques

[1] P. Groves « Principles of GNSS, Inertial and multisensor integrated navigation systems 2nd édition » Artech House, 2013

[2] H. E. Rauch, F. Tung, and C. T. Striebel, "Maximum likelihood estimates of linear dynamic systems," AIAA journal, vol. 3, no. 8, pp. 1445-1450

[3] US2016/0252354 A1

[4] US2019/0187296 A1

### Revendications

1. Procédé de détermination d'une trajectoire d'un porteur mobile, comprenant les étapes suivantes :

   S1) à chaque instant $t_i$, détermination d'une trajectoire fusionnée (TrA) du porteur mobile, la trajectoire fusionnée (TrA) étant obtenue par fusion de données fournies par au moins un capteur à information de position relative (CR) avec des données fournies par au moins un capteur à information de position absolue (CA), et, à une pluralité d'instants déterminés $t_k$ parmi les instants $t_i$, génération d'un paquet de données fusionnées ( $D_k^{fus}$ )

comprenant des données fusionnées à l'instant déterminé $t_k$ et au moins un indicateur de confiance ( $c_k^{fus}$ )

associé au paquet de données de la position fusionnée à l'instant déterminé $t_k$, l'indicateur de confiance ( $c_k^{fus}$ ) comprenant une information de précision des données fournies par le capteur à information de position absolue (CA) ;

S2) à chaque instant déterminé $t_k$, détermination d'une trajectoire régularisée (TrB) en fonction de la détection d'un saut de position dans le paquet de données fusionnées ( $D_k^{fus}$ ) entre l'instant sélectionné précédent $t_{k-1}$ et l'instant sélectionné $t_k$.

2.  Procédé selon la revendication 1, comprenant en outre une étape S3) de segmentation de la trajectoire régularisée en segments dits à forte confiance ( $S_m^{FC}$ ) et en segments dits à non-forte confiance ( $S_m^{NFC}$ ), la segmentation étant effectuée en fonction de l'indicateur de confiance ( $c_k^{fus}$ ) associée au paquet de données fusionnées ( $D_k^{fus}$ ) pour chaque instant déterminé $t_k$, et de détermination d'une trajectoire post-traitée (TrC), la trajectoire post-traitée (TrC) correspondant à la trajectoire fusionnée (TrA) pour chaque segment à forte confiance ( $S_m^{FC}$ ), et la trajectoire post-traitée (TrC) étant déterminée, pour chaque segment à non-forte confiance ( $S_m^{NFC}$ ), par une transformation géométrique du segment à non-forte confiance ( $S_m^{NFC}$ ) de telle sorte qu'une condition de continuité soit satisfaite entre chacune de ses extrémités ( $p_{k_m}^{reg}, p_{k_{m+l}}^{reg}$ ) et l'extrémité ( $p_{k_{m-1}}^{fus}, p_{k_{m+l+1}}^{fus}$ ) du segment à forte confiance adjacent.

3.  Procédé selon l'une des revendications précédentes, dans lequel le capteur à information de position relative comprend une centrale inertielle.

4.  Procédé selon l'une des revendications précédentes, dans lequel le capteur à information de position absolue comprend un récepteur GNSS supportant le mode RTK, l'indicateur de confiance ( $c_k^{fus}$ ) étant fourni par la valeur RTK du récepteur GNSS, en particulier la valeur « RTK fix ».

5.  Procédé selon l'une des revendications précédentes, dans lequel la première étape S1 comprend le calcul d'un indicateur de correction qui représente l'écart entre les données fournies par le capteur à information de position relative et les données fournies par le capteur à information de position absolue entre deux instants sélectionnés consécutifs $t_{k-1}$ et $t_k$ .

6.  Procédé selon la revendication 5, dans lequel l'indicateur de correction est déterminé par la relation :

$$Icorr = \sum_{i=k-1}^{k} \|x_i\|$$ , $x_i$ correspondant à une correction de trajectoire à un instant $t_i$ .

7.  Procédé selon l'une des revendications 5 ou 6, dans lequel la détection d'un saut de position comprend la comparaison de l'indicateur de correction avec un seuil prédéterminé (*Tsaut*).

8.  Procédé selon l'une des revendications précédentes, dans lequel la trajectoire régularisée (TrB) est déterminée en

appliquant une compensation ($\Delta_k$) à la position ( $p_k^{fus}$ ) sur la trajectoire fusionnée (TrA) à l'instant déterminé $t_k$, la compensation étant déterminée de façon itérative par la relation suivante : $\Delta_k = \Delta_{k-1} + \delta_k$, dans lequel $\Delta_k$ correspond à la compensation à l'instant déterminé $t_k$, $\Delta_{k-1}$ correspond à la compensation à l'instant déterminé précédent $t_{k-1}$, $\delta_k$

correspond à une correction à l'instant déterminé $t_k$ déterminée par la relation suivante :

$$\delta_k = \begin{cases} 0 & \text{si pas de saut détecté} \\ p_k^{fus} - p_{k-1}^{fus} & \text{si un saut est détecté} \end{cases},$$

$p_k^{fus}$ correspondant à la position sur la trajectoire fusionnée (TrA) à l'instant déterminé $t_k$ ; $p_{k-1}^{fus}$ correspondant à la position sur la trajectoire fusionnée (TrA) à l'instant déterminé précédent $t_{k-1}$.

9.  Procédé selon l'une des revendications 7 ou 8, dans lequel le seuil prédéterminé (*Tsaut*) est déterminé en fonction de la qualité du capteur à information de position relative.

10. Procédé selon l'une des revendications 2 ou 3 à 9 dans leur dépendance avec la revendication 2, dans lequel la transformation géométrique comprend au moins une translation ou une rotation.

11. Procédé selon la revendication 10, dans lequel la transformation géométrique comprend en outre une homothétie lorsque le segment à non-forte confiance est précédé ou suivi d'un segment à forte confiance.

12. Procédé selon la revendication 11, dans lequel la transformation géométrique ($g_m$) appliquée à une position p sur le segment à non-forte confiance ( $S_1^{NFC}$ ) est définie par la relation : $g_m(p) = H_m R_m \left( p - p_{k_m}^{reg} \right) + p_{k_m}^{corr}$ ;

$p_{k_m}^{corr}$ correspondant au premier point appartenant au segment à non-forte confiance, qui coïncide avec le point précédent $p_{k_m-1}^{fus}$ qui appartient au segment à forte confiance voisin ; $p_{k_m}^{reg}$ correspondant au premier point du segment sur la trajectoire régularisée TrB ; $H_m$ correspondant au coefficient d'homothétie :

$$H_m = \frac{\left\| p_{k_m}^{reg} - p_{k_{m+1}}^{reg} \right\|}{\left\| p_{k_m-1}^{fus} - p_{k_{m+l+1}}^{fus} \right\|} \; ; \; p_{k_{m+1}}^{reg}$$

correspondant au dernier point du segment sur la trajectoire régularisée TrB ; $p_{k_m-1}^{fus}$ correspondant au dernier point du segment à forte confiance précédent le segment à non-forte confiance, $p_{k_{m+l+1}}^{fus}$ correspondant au premier point du segment à forte confiance suivant le segment à non-forte confiance ; Avec $R_m$ définie par : $R_m =$

$$\begin{bmatrix} \cos\varphi & \sin\varphi & 0 \\ -\sin\varphi & \cos\varphi & 0 \\ 0 & 0 & 1 \end{bmatrix} \; ;$$

L'angle de la rotation $\varphi$ étant calculé par les relations :

$$u = \begin{bmatrix} 0 & 0 & 1 \end{bmatrix}^T$$

$$x = \left( p_{k_m}^{reg} - p_{k_{m+l}}^{reg} \right)$$

$$y = \left( p_{k_m-1}^{fus} - p_{k_{m+l+1}}^{fus} \right);$$

$$z = x \otimes y$$

$$c = \text{signe}(z^T u) . \|z\|$$

$$\varphi = \text{atan}(c, x^T y)$$

Avec $\otimes$ le produit vectoriel et $x^T$ l'opérateur transposé.

13. Procédé selon l'une des revendications 2 ou 3 à 12 dans leur dépendance avec la revendication 2, dans lequel l'étape S3 comprend en outre une recombinaison pondérée de la trajectoire fusionnée (TrA) et de la trajectoire post-traitée (TrC).

14. Procédé selon l'une des revendications 2 ou 3 à 13 dans leur dépendance avec la revendication 2, dans lequel les étapes S1 et S2 sont exécutées en temps réel durant le déplacement du porteur mobile, et l'étape S3 est exécutée en temps différé.

15. Système de détermination d'une trajectoire d'un porteur mobile, comprenant :

   - un dispositif mobile (DM), embarqué sur le porteur mobile, comprenant au moins un capteur à information de position relative et au moins un capteur à information de position absolue, le dispositif mobile étant configuré pour, à chaque instant $t_i$, déterminer une trajectoire fusionnée (TrA) du porteur mobile, la trajectoire fusionnée (TrA) étant obtenue par fusion de données fournies par le capteur à information de position relative avec des données fournies par le capteur à information de position absolue, et, à une pluralité d'instants déterminés $t_k$ parmi les instants $t_i$, générer un paquet de données fusionnées ($D_k^{fus}$) comprenant des données fusionnées à l'instant déterminé $t_k$ et au moins un indicateur de confiance ($c_k^{fus\cdot}$) associé au paquet de données de la position fusionnée à l'instant déterminé $t_k$, l'indicateur de confiance ($c_k^{fus}$) comprenant une information de précision des données fournies par le capteur à information de position absolue ;
   - un dispositif fixe (DF), configuré pour déterminer, à chaque instant déterminé $t_k$, une trajectoire régularisée (TrB) en fonction de la détection d'un saut de position du porteur mobile dans le paquet de données fusionnées entre l'instant déterminé précédent $t_{k-1}$ et l'instant déterminé $t_k$.

16. Système selon la revendication 15, dans lequel le dispositif fixe (DF) est, en outre, configuré pour segmenter la trajectoire corrigée en segments dits à forte confiance ($S_m^{FC}$) et en segments dits à non-forte confiance ($S_m^{NFC}$), la segmentation étant effectuée en fonction de l'indicateur de confiance ($c_k^{fus}$) associé au paquet de données pour chaque instant déterminé $t_k$, et pour déterminer une trajectoire post-traitée (TrC), la trajectoire post-traitée (TrC) correspondant à la trajectoire fusionnée (TrA) pour chaque segment à forte confiance ($S_m^{FC}$), et la trajectoire post-traitée (TrC) étant déterminée, pour chaque segment à non-forte confiance ($S_m^{NFC}$), par une transformation géométrique du segment à non-forte confiance ($S_m^{NFC}$) de telle sorte qu'une condition de continuité soit satisfaite entre chacune de ses extrémités ($p_{k_m}^{reg}, p_{k_{m+1}}^{reg}$) et l'extrémité ($p_{k_{m-1}}^{fus}, p_{k_{m+l+1}}^{fus}$) du segment à forte confiance adjacent.

17. Système selon la revendication 16, dans lequel le dispositif mobile (DM) et le dispositif fixe (DF) sont connectés entre eux par une liaison radio.

**Fig. 1**

**Fig. 2**

## Fig. 3

## Fig. 4

**Fig. 5**

```
          ┌──────────────────────────────┐
          │             S21              │
          └──────────────────────────────┘
                         │
                         ▼
          ┌──────────────────────────────┐
          │             S22              │
          └──────────────────────────────┘
                         │
                         ▼
                      ╱ S23 ╲─────────────────┐
                      ╲     ╱                 │
                         │                    │
                        oui                  non
                         │                    │
                         ▼                    │
          ┌──────────────────────────────┐   │
          │             S24              │   │
          └──────────────────────────────┘   │
                         │                    │
                         ▼                    │
          ┌──────────────────────────────┐   │
          │             S25              │◄──┘
          └──────────────────────────────┘
                         │
                         ▼
          ┌──────────────────────────────┐
          │             S26              │
          └──────────────────────────────┘
```

# Fig. 6

**Fig. 7**

**Fig. 8**

**Fig. 9**

# EP 4 492 097 A1

<table>
<tr><td colspan="2">Europäisches Patentamt<br>European Patent Office<br>Office européen des brevets</td><td>**RAPPORT DE RECHERCHE EUROPEENNE**</td><td>Numéro de la demande<br><br>EP 24 18 8465</td></tr>
</table>

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 3 701 286 A1 (FOCAL POINT POSITIONING LTD [GB]) 2 septembre 2020 (2020-09-02)<br>* alinéas [0012], [0029], [0032], [0051], [0065] - [0067], [0081], [0084] *<br>- - - - - | 1-17 | INV.<br>G01S19/49<br>G01C21/16<br>G01S19/40<br>G01S19/43<br>G01S19/47 |
| X | US 2018/039284 A1 (HITOSUGI KAZUO [JP] ET AL) 8 février 2018 (2018-02-08)<br>* alinéas [0028], [0031] - [0034], [0051], [0052], [0064] - [0079] *<br>- - - - - | 1-17 | |
| A | US 2011/187590 A1 (LEANDRO RODRIGO [DE]) 4 août 2011 (2011-08-04)<br>* abrégé *<br>- - - - - | 1-17 | |

**DOMAINES TECHNIQUES RECHERCHES (IPC)**

G01S
G01C

Le présent rapport a été établi pour toutes les revendications

| Lieu de la recherche | Date d'achèvement de la recherche | Examinateur |
|---|---|---|
| Munich | 16 juillet 2024 | Chindamo, Gregorio |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 18 8465

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-07-2024

| Document brevet cité au rapport de recherche | | Date de publication | Membre(s) de la famille de brevet(s) | | Date de publication |
|---|---|---|---|---|---|
| EP 3701286 | A1 | 02-09-2020 | CN | 111263900 A | 09-06-2020 |
| | | | EP | 3701286 A1 | 02-09-2020 |
| | | | GB | 2567845 A | 01-05-2019 |
| | | | KR | 20200078507 A | 01-07-2020 |
| | | | US | 2019128673 A1 | 02-05-2019 |
| | | | US | 2021278216 A1 | 09-09-2021 |
| | | | US | 2024027194 A1 | 25-01-2024 |
| | | | WO | 2019081944 A1 | 02-05-2019 |
| US 2018039284 | A1 | 08-02-2018 | DE | 102017210623 A1 | 08-02-2018 |
| | | | JP | 6395771 B2 | 26-09-2018 |
| | | | JP | 2018021834 A | 08-02-2018 |
| | | | US | 2018039284 A1 | 08-02-2018 |
| | | | US | 2018364736 A1 | 20-12-2018 |
| US 2011187590 | A1 | 04-08-2011 | CN | 102171583 A | 31-08-2011 |
| | | | DE | 112009002434 T5 | 29-09-2011 |
| | | | US | 2011187590 A1 | 04-08-2011 |
| | | | WO | 2010042441 A1 | 15-04-2010 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20160252354 A1

- US 20190187296 A1

**Littérature non-brevet citée dans la description**

- **P. GROVES**. Principles of GNSS, Inertial and multisensor integrated navigation systems. Artech House, 2013

- **H. E. RAUCH** ; **F. TUNG** ; **C. T. STRIEBEL**. Maximum likelihood estimates of linear dynamic systems. *AIAA journal*, vol. 3 (8), 1445-1450